# EUROPÄISCHE PATENTSCHRIFT

(11) **EP 3 648 563 B1**
(45) Veröffentlichungstag und Bekanntmachung des Hinweises auf die Patenterteilung: **07.09.2022**
(21) Anmeldenummer: 18749293.9
(22) Anmeldetag: 04.07.2018
(51) Int. Cl.: A01B 17/00, A01B 49/06, A01C 7/08, A01C 15/00, A01C 9/04

(54) **PFLUG MIT MINDESTENS EINEM PFLUGSCHAR ZUM WENDEN VON ERDE**
PLOW HAVING AT LEAST ONE PLOWSHARE FOR TURNING SOIL
CHARRUE COMPRENANT AU MOINS UN SOC DE CHARRUE POUR RETOURNER LA TERRE

(30) Priorität: 04.07.2017 DE 102017114883
(43) Veröffentlichungstag der Anmeldung: 13.05.2020
(73) Patentinhaber: Maier, Mathias, 84573 Schönberg (DE)
(72) Erfinder: Maier, Mathias, 84573 Schönberg (DE)
(74) Vertreter: Rothkopf, Ferdinand
(86) Internationale Anmeldenummer: PCT/DE2018/100613
(87) Internationale Veröffentlichungsnummer: WO 2019/007464

(56) Entgegenhaltungen:
- AT-B- 216 267
- CN-Y- 2 416 714
- DE-A1- 1 900 213
- DE-A1- 2 819 081
- DE-B- 1 270 871
- DE-C- 946 095

## Beschreibung

### Hintergrund der Erfindung

Die Erfindung betrifft einen Pflug mit mindestens einem Pflugschar zum Wenden von Erde auf einem landwirtschaftlichen Acker bzw. Feld mittels Ziehen des Pfluges in eine Pflügerichtung.

Pflügen ist das Wenden einer Ackerkrume mit Hilfe eines Pflugs. Vorliegend wird als Pflug nur ein solches Ackergerät verstanden, dessen Pflugschar zum Wenden der zugehörigen Scholle führt.

Durch Pflügen wird die Bodenstruktur aufgelockert. Somit ergibt sich eine größere, aber auch raue Oberfläche. Um in eine solche raue Oberfläche eine Saat einzubringen ist es üblich, den Acker danach mit der Egge zu glätten. Das Feld wird zur Saatbereitung "geeggt".

Das hier diskutierte Pflügen bzw. der hier diskutierte Pflug steht damit im Gegensatz zum Grubbern bzw. einem Grubber. Ein Grubber ist ein landwirtschaftliches Gerät zur nichtwendenden Bodenbearbeitung, das zur Lockerung und Krümelung des Bodens sowie zur Unkrautbekämpfung und Einarbeitung von humosen Materialien in den Boden eingesetzt wird. Die mit einem Grubber bearbeitete Oberfläche ist im Vergleich zu einer mit einem Pflug bearbeiten Oberfläche vergleichsweise glatt. Grubber sind als Teil von Saatbettkombinationen zur Bereitung eines optimalen Saatbettes bekannt. Die nachlaufenden Geräte, meist Schrägstab-Wälzeggen (Krümler) oder auch Saateggen, krümeln den gelockerten Boden weiter und drücken ihn zur Vorbereitung des notwendigen Erdschlusses des einzubringenden Saatgutes in Saattiefe an.

Aus DE 1 900 213 A ist ein Düngereinleger bekannt, der im Bereich eines Pflugkörpers eines Beetpfluges oder Drehpfluges angeordnet ist und faserige Bestandteile während des Pflügens in die Furche einlegt.

### Zugrundeliegende Aufgabe

Der Erfindung liegt die Aufgabe zugrunde, einen Pflug mit mindestens einem Pflugschar zum Wenden von Erde bereitzustellen, der im Vergleich zu herkömmlichen Pflügen eine vergrößerte Funktionalität aufweist.

### Erfindungsgemäße Lösung

Diese Aufgabe ist erfindungsgemäß mit einem Pflug gemäß dem Gegenstand des Anspruchs 1 gelöst.

Mit dem erfindungsgemäßen Pflug ist es möglich während des Pflügens eines Ackers zeitgleich ein Schüttgut, wie insbesondere ein Saatgut oder einen Dünger auszubringen. Die Erfindung zielt also auf ein Sähen bzw. Ausbringen von Schüttgut, wie Saatgut, Dünger und/oder anderer Granulate, an einem Pflug. Das Fördern und Ausbringen des Schüttguts erfolgt pneumatisch.

Darüber hinaus ermöglichen es die erfindungsgemäßen Ausgaberohre das ausgebrachte Schüttgut lagegenau in unmittelbarer Nähe am Pflugschar auszubringen. Derart ausgebracht ist es möglich, die Lage des ausgebrachten Schüttguts auf dem Acker nicht nur in der Ausbringungsbreite zu beeinflussen, sondern auch hinsichtlich der Ausbringungstiefe. Dabei kann das Schüttgut gemäß der Erfindung an der sich beim Wenden befindenden Scholle in genau dem passenden Bereich derart ausgebracht werden, dass es sich nach dem Wenden der Scholle dann in der richtigen Ausbringungstiefe befindet.

Der erfindungsgemäße Pflug ist, das haben Untersuchungen gezeigt, besonders zum Ausbringen von Ansaat für Zwischenfrüchte geeignet. Aber auch zum Ausbringen von Saatgut für Hauptfrüchte ist das erfindungsgemäße Pflügeverfahren sowie die zugehörige Pflügevorrichtung vorteilhaft verwendbar. Als Zwischenfrucht bezeichnet man in der Landwirtschaft eine Feldfrucht, die zwischen anderen zur Hauptnutzung dienenden Feldfrüchten als Gründüngung oder zur Nutzung als Tierfutter angebaut wird. Durch Zwischenfruchtanbau lassen sich verschiedene Effekte erzielen. Er kann dazu dienen, Stickstoff aus der Luft aufzunehmen und ihn in den Zellen der Zwischenfrüchte zu binden. Die Zwischenfrüchte werden dann später untergearbeitet, so dass der in ihnen gebundene Stickstoff für die nächste Frucht in der Fruchtfolge zur Verfügung steht. Da Stickstoff ein wichtiger Pflanzennährstoff ist, kann durch den Zwischenfruchtanbau der Ertrag gesteigert werden.

Andere Effekte bestehen in Anregung und Förderung der Bodenorganismen. Verdichtete oder durch Auswaschung geschädigte Böden lassen sich mit Zwischenfrüchten regenerieren. Auch gibt es Feldfrüchte, die nicht unmittelbar nacheinander angebaut werden sollten. Hier dient die Zwischenfrucht als trennende Kultur in der Fruchtfolge. Ferner kann man Böden nach Infektionskrankheiten wie Pilz-, Viren oder Bakterienbefall durch den Anbau von Zwischenfrüchten etwas Ruhe gönnen.

In Verbindung mit dem erfindungsgemäßen Pflug bevorzugte Zwischenfrüchte sind einjähriges Weidelgras, diverse Kleesorten, wie mehrjähriges Kleegras und Alexandriner-Klee, Grünroggen, Sommer- und Winterraps, Weißer Senf, Lupine und andere Hülsenfrüchte, wie Futtererbsen und Saatwicken, Ölrettich, Phacelia, Markstammkohl sowie Winterrübsen.

Bei einer vorteilhaften Weiterbildung der Erfindung weist das mindestens eine Pflugschar eine zur Pflügerichtung gewandte Vorderseite und eine davon abgewandte Rückseite auf und es ist ein erstes Ausgaberohr mit seiner Mündung an der Vorderseite und/oder ein zweites Ausgaberohr mit seiner Mündung an der Rückseite vorgesehen.

Mit der derartigen Weiterbildung ist es möglich, an dem einzelnen Pflugschar des erfindungsgemäßen Pfluges auch zwei verschiede Schüttgüter gleichzeitig auszubringen. Die verschiedenen Schüttgüter können insbesondere eine Saatgut-Sorte und ein Dünger oder vorteilhaft auf zwei Saatgut-Sorten sein. Insbesondere kann auf diese Weise in nur einem Arbeitsgang an dem Pflugschaar das Saatgut einer Dunkelkeimer-Sorte hinter dem Pflugschaar in den Boden hinein abgelegt werden und zugleich das Saatgut einer Lichtkeimer-Sorte vor dem Pflugschar oben auf den Boden aufgebracht werden.

Vorzugsweise ist ferner die Ausbringeinrichtung mit mindestens einer Prallplatte gestaltet, auf die das Schüttgut von dem mindestens einen Ausgaberohr durch dessen Mündung aufzubringen ist. Ferner ist insbesondere zum Verteilen des ausgebrachten Schüttguts vor der Mündung des mindestens einen Ausgaberohrs ein Schlepplauch, ein Schleppschuh, ein Saatstriegel, ein Luftinjektor oder eine Verteildüse vorgesehen.

Mittels der Prallplatte kann das am Ausgaberohr ausgebrachte Saatgut verteilt und auf diese Art die Ausbringungsfläche verbreitert werden.

Vorteilhaft ist die Ausbringeinrichtung mit einer Verstellvorrichtung versehen, mittels der die mehreren Ausgaberohre hinsichtlich ihrer Mündungen relativ zum zugehörigen Pflugschar zugleich verstellbar sind.

Mit der derartigen Ausbringungseinrichtung ist eine gemeinsame Lageänderung der Mündungen der Ausgaberohre relativ zum jeweiligen Pflugschar mit nur einer Betätigung der zugehörigen Verstellvorrichtung möglich. Die Ausbringungsvorrichtung kann ferner vorteilhaft als eigenständige Vorrichtung ausgebildet sein, die am Pflug demontierbar anzubringen ist. Die derartige Vorrichtung ist leicht nachzurüsten und auch für Reparatur und Wartungszwecke leicht zu entfernen. Ferner kann die Ausbringungseinrichtung vorteilhaft als Schwenkeinrichtung ausgebildet sein, so dass Ausgaberohre auch abwechselnd mehren Pflugscharen zugewiesen werden können. Dies ist insbesondere bei Volldrehpflügen von Vorteil, wie nachfolgend noch genauer erläutert wird.

Die Ausbringeinrichtung ist ferner vorteilhaft mit mehreren Vorratsbehältern für unterschiedliche Schüttgüter versehen.

Auf diese Weise können, wie oben bereits angesprochen, vorteilhaft unterschiedlichste Schüttgüter, wie insbesondere Saatgut und Dünger, vorzugsweise aber auch den Ackerboden verbessernde Substanzen, wie etwa Kalksand oder Torfgranulat, ausgebracht werden.

Besonders bevorzugt weist die Ausbringeinrichtung mindestens einen ersten Vorratsbehälter auf, der zum Anbringen an der Front eines Schleppers angepasst ist, und/oder mindestens einen zweiten Vorratsbehälter auf, der zum Anbringen am Heck des Schleppers angepasst ist. Die derartige Anbringung von Vorratsbehältern vorne und/oder hinten am Schlepper ermöglicht eine vorteilhafte Lastverteilung auf die Achsen des Schleppers.

Vorteilhaft ist insbesondere eine Anbringung an der Front des Schleppers, wenn es sich bei dem erfindungsgemäßen Pflug um einen vergleichsweise schweren Volldrehpflug handelt. Unter Volldrehpflug wird dabei ein Pflug verstanden, der eine obere Reihe Pflugschare und eine untere Reihe Pflugschare aufweist, die abwechselnd in den Ackerboden einzusetzen sind. Ein Volldrehpflug hat in der Regel vorne an seinem Dreipunktturm ein Drehwerk, an dem der die Pflugschare tragende Pflugrahmen gedreht werden kann. An dem Pflugrahmen sind hinter dem Drehwerk nach oben und nach unten hin abstehend die Pflugschare bzw. Pflugkörper angeordnet. Ein Volldrehpflug wird am Ende eines Feldes aus der gerade gepflügten Furche gehoben, während des Wendens des Schleppers gedreht und dann beim anschließenden Pflügen der nächsten Furche in gedrehter Lage wieder eingesetzt.

Mit dem Anordnen von Vorratsbehältern an der Front des Schleppers steht insbesondere für einen Volldrehpflug am Heck mehr Platz für die Drehbewegung des Volldrehpfluges zur Verfügung. Besonders vorteilhaft ist es auch, an der Front bzw. im Frontbereich des Schleppers mehrere Vorratsbehälter oder einen geteilten Behälter anzuordnen. So können auch an einem erfindungsgemäßen Volldrehpflug mehrere unterschiedliche Schüttgüter ausgebracht werden.

Daher ist eine vorteilhafte Weiterbildung der erfindungsgemäßen Lösung auch speziell darauf gerichtet, dass der Pflug als Volldrehpflug mit mindestens einem ersten Schar und mindestens einem zweiten Schar gestaltet ist, wobei die Schare mittels Drehen des Pfluges abwechselnd in die Erde des zu bearbeitenden Ackers einzusetzen sind.

Die erfindungsgemäße Ausbringeinrichtung ist dann vorteilhaft am mindestens einen ersten Pflugschar und am mindestens einen zweiten Pflugschar ausgebildet.

Vorteilhaft sind auch mehrere Haltevorrichtungen oder eine gemeinsame Haltevorrichtung für die Ausbringeinrichtungen vorgesehen, die einzeln oder gemeinsam verstellbar sind. Bei einer kleinen Bauhöhe des zugehörigen Volldrehpfluges sind die Ausbringeinrichtungen vorteilhaft an einer rahmenartigen Haltevorrichtung angebracht, die vorzugsweise starr zwischen dem mindestens einen ersten Pflugschar und dem mindestens einen zweiten Pflugschar am zugehörigen Pflugrahmen angeordnet ist. Alternativ kann diese eine Haltevorrichtung auch derart schwenkbar am Pflugrahmen angeordnet sein, dass sie von dem mindestens einen ersten Pflugschar zu dem mindestens einen zweiten Pflugschar und zurück geschwenkt werden kann. Die Schwenklage wird dann so gewählt, dass die Ausbringeinrichtung jeweils zu den in den Boden einzusetzenden Pflugscharen gestellt ist. Bei einem Volldrehpflug mit vergleichsweise großer Bauhöhe ist es vorteilhaft, zwei Haltevorrichtungen vorzusehen, an denen jeweils eine Reihe von Ausgaberohren angebracht sind.

Gemäß der Erfindung ist die Ausbringeinrichtung ferner bevorzugt mit einer Zuführvorrichtung zum Zuführen des Schüttgutes zu dem mindestens einen Ausgaberohr versehen und in der Zuführvorrichtung ist ein Y-Abzweiger zum abwechselnden Zuführen des Schüttgutes zum mindestens einen ersten Pflugschar und zum mindestens einen zweiten Pflugschar vorgesehen.

Der Y-Abzweiger verteilt dabei vorteilhaft das herangeführte Schüttgut zu jeweils dem Pflugschar, das während des Pflügens in die Erde des zu bearbeitenden Ackers eingesetzt ist.

An dem erfindungsgemäßen Volldrehpflug ist ferner vorteilhaft eine Erkennvorrichtung zum Erkennen der Drehlage des Pfluges vorgesehen, insbesondere in Gestalt eines Tastrades, mittels der an der Zuführvorrichtung einzustellen ist, ob der mindestens eine erste Pflugschar oder der mindestens eine zweite Pflugschar mit Schüttgut zu versorgen ist.

Die derartige Erkennvorrichtung steuert die Zuführung von Schüttgut zu den Pflugscharen des Volldrehpfluges in Abhängigkeit der Drehlage des Pfluges. Dabei kommt insbesondere der genannte Y-Abzweiger in der Weise zum Einsatz, dass mittels einer Ventilvorrichtung am Y-Abzweiger zum Heranführen an den mindestens einen ersten Pflugschar das herangeführte Schüttgut durch den einen Schenkel der Y-Form gelenkt wird und zum Heranführen an den mindestens einen zweiten Pflugschar das herangeführte Schüttgut durch den zweiten Schenkel der Y-Form gelenkt wird.

Die erfindungsgemäße Ausbringeinrichtung ist vorzugsweise mit mindestens einem Gebläse zum Fördern des Schüttgutes versehen und/oder an dem mindestens einen Ausgaberohr ist vorzugsweise ein Luftabscheider zum Abscheiden von Luft aus dem Ausgaberohr vorgesehen.

Das mindestens eine Gebläse ermöglicht eine einfache Zuführung des bzw. der Schüttgüter mittels Rohren auch über größere Entfernungen. Dabei kann das Schüttgut insbesondere von der Front des Schleppers bis zu dessen Heck gefördert werden.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:

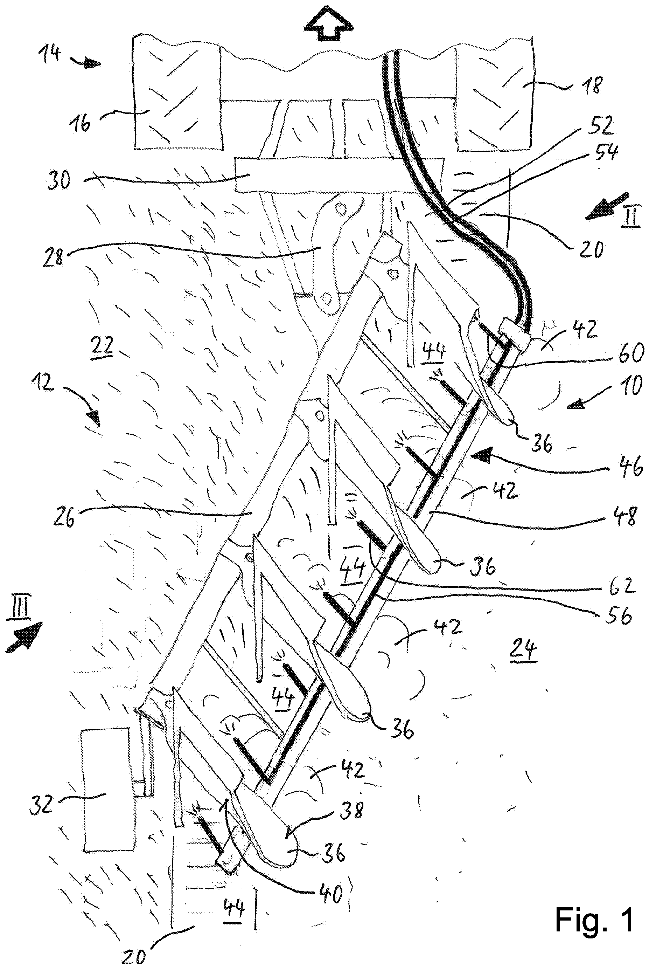

Fig. 1 eine Draufsicht auf einen erfindungsgemäßen Pflug während des Plügens auf einem Acker,

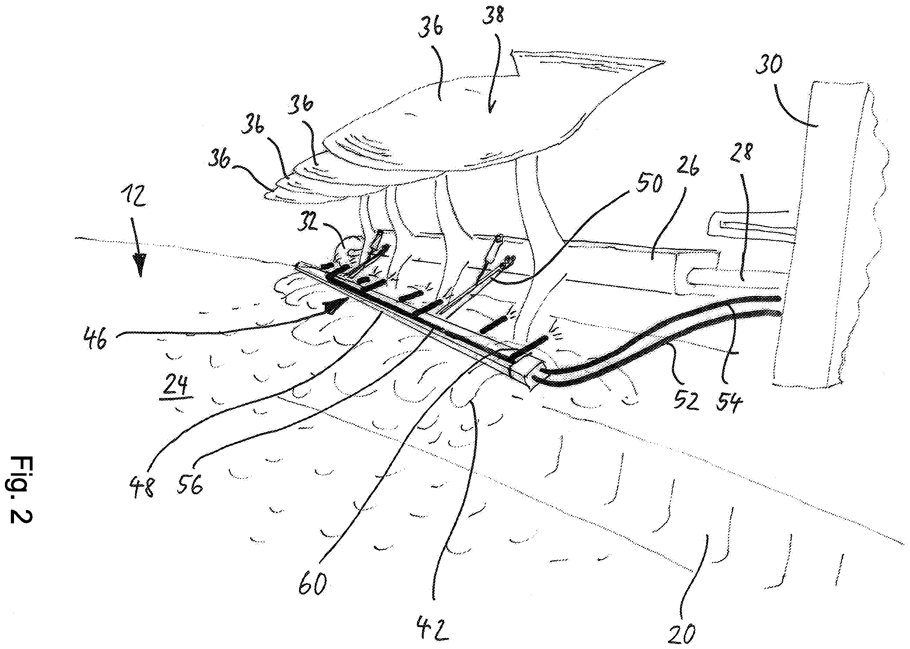

Fig. 2 die Ansicht II gemäß Fig. 1 und

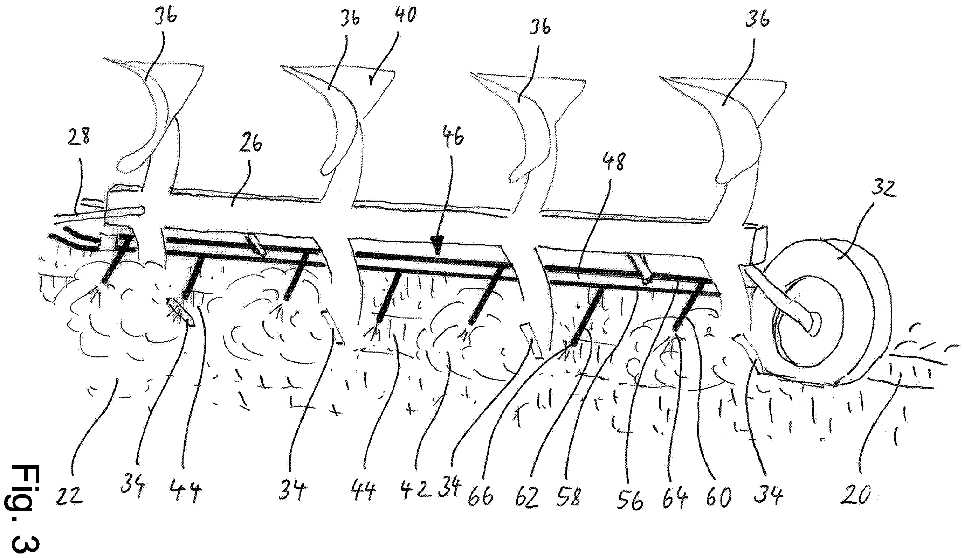

Fig. 3 die Ansicht III gemäß Fig. 1.

### Detaillierte Beschreibung des Ausführungsbeispiels

In den Fig. ist ein Pflug 10 auf einem Acker 12 dargestellt, der an einem Schlepper 14 angehängt ist. Der Schlepper weist ein linkes Schlepperrad 16 und ein rechtes Schlepperrad 18 auf, wobei das rechte Schlepperrad 18 sich entlang einer Furche 20 bewegt. Die Furche und der sich am Schlepper 14 befindende Pflug 10 trennen den Acker 12 so in eine ungepflügte Fläche 22 und eine gepflügte Fläche 24 auf.

Der Pflug 10 ist mit einem längsgestreckten Pflugrahmen 26 gestaltet, der bezogen auf die Hauptfahrtrichtung des Schleppers 14 bzw. Pflügerichtung vorne mittels einer Drehvorrichtung 28 an einer Stützvorrichtung 30 befestigt ist. Der Pflugrahmen 26 kann bei angehobenem Pflug 10 an der Drehvorrichtung 28 um 180° gedreht bzw. hin und her geschwenkt werden. Er ist also als Volldrehpflug gestaltet.

Die Stützvorrichtung 30 ist am Schlepper 14 befestigt und dort, in der Regel mittels einer Dreipunkthydraulik (nicht dargestellt) anhebbar und absenkbar. Im abgesenkten Zustand ist der Pflugrahmen 26 an seinem hinteren Ende mittels eines Rades 32 in Form eines Tastrades bzw. Stützrades auf der ungepflügten Fläche 22 des Ackers 12 leicht abgestützt.

Am Pflugrahmen 26 sind in der dargestellten Drehlage vier nach unten hin abstehende, erste Pflugschare 34 in Reihe aufeinanderfolgend angeordnet. In gleicher Weise sind an dem Pflugrahmen 26 vier nach oben hin abstehende, zweite Pflugschare 36 in Reihe aufeinanderfolgend angeordnet. Die ersten und zweiten Pflugschare 34 bzw. 36 liegen einander also in Bezug auf den Pflugrahmen 26 gegenüber. Bei der dargestellten Drehlage sind die ersten Pflugschare 34 in den Acker 12 eingesetzt, während die zweiten Pflugschare 36 nach oben hin vom Acker weg ragen.

Jedes der Pflugschare 34 und 36 weist bezogen auf die Pflügerichtung eine Vorderseite 38 sowie eine Rückseite 40 auf. Mittels der Vorderseite 38 schiebt das jeweilige Pflugschar, vorliegend die in den Acker 12 eingesetzten ersten Pflugschare 34 frisch gewendete Erde 42 vor sich her und wirft diese neben sich ab. Hinter dem jeweiligen Pflugschar bildet sich an dessen Rückseite 40 zugleich ein Freiraum 44 als kurzer Abschnitt einer Furche 20. Der Freiraum 44 hinter dem letzten Pflugschar bildet dann jeweils die eigentliche neue Furche 20.

An dem Pflug 10 ist eine Ausbringeinrichtung 46 zum Ausbringen von zwei Schüttgütern, vorliegend einem Saatgut von Lichtkeimern und einem Saatgut von Dunkelkeimern, angebracht.

Die Ausbringeinrichtung 46 weist einen längsgestreckten, sich im Wesentlichen parallel zum Pflugrahmen 26 erstreckenden Ausbringeinrichtungsrahmen 48 auf, der mittels einer Schwenkvorrichtung 50 an dem Pflugrahmen 26 schwenkbar befestigt ist. Der Ausbringungseinrichtungsrahmen 48 befindet sich dabei zwischen den vom Pflugrahmen 26 abgewandten Teilen der Pflugschare 34 und 36.

Zu dem Ausbringeinrichtungsrahmen 48 sind vom Schlepper 14 ausgehend ein erster Zuführschlauch 52 und ein zweiter Zuführschlauch 54 geführt. Der erste Zuführschlauch 52 geht dort in ein erstes Zuführrohr 56 über, das sich längs des Ausbringeinrichtungsrahmens 48 an dessen Oberseite erstreckt. Der zweite Zuführschlauch 54 geht in ein zweites Zuführrohr 58 über, das sich längs des Ausbringeinrichtungsrahmens 48 an dessen Unterseite erstreckt.

Von dem ersten Zuführrohr 56 stehen vier erste Ausgaberohre 60 ab. Die Ausgaberohre 60 sind derart lang und derart ausgerichtet, dass sich die zugehörige Mündung 64 sich jeweils in unmittelbarer Nähe der Vorderseite 38 des jeweils zugehörigen Pflugschars befindet. Unter "unmittelbarer Nähe" wird hier ein Abstand von der Vorderseite bzw. Rückseite des Pflugschars von zwischen 5 cm und 75 cm (Zentimeter), vorzugsweise zwischen 20 cm und 30 cm, insbesondere zwischen 10 cm und 50 cm verstanden.

Von dem zweiten Zuführrohr 58 stehen vier zweite Ausgaberohre 62 ab. Die Ausgaberohre 62 sind derart lang und derart ausgerichtet, dass sich die zugehörige Mündung 66 jeweils in unmittelbarer Nähe der Rückseite 40 des jeweils zugehörigen Pflugschars befindet.

Auf diese Weise kann mit der Ausbringeinrichtung 46 durch die ersten Ausgaberohre 60 ein erstes Saatgut von Lichtkeimern als erstes Schüttgut oben auf die frisch gewendete Erde 42 verteilt werden. Zugleich kann mit der Ausbringeinrichtung 46 durch die zweiten Ausgaberohre 62 ein zweites Saatgut von Dunkelkeimern als zweites Schüttgut in den jeweiligen Freiraum 44 verteilt werden. Das Saatgut von Dunkelkeimern wird dann von dem jeweils nachfolgenden Pflugschar 34 bzw. 36 mit frisch gewendeter Erde 42 überdeckt.

Die Verteilung des Saatguts an den Mündungen 64 und 66 hinsichtlich Ablagebreite und Ablagetiefe kann mittels einer Prallscheibe, einem Luftinjektor, einem Schleppschuh, einem Schleppschlauch, einem Sähschar oder einer Verteildüse sowie einer zugehörigen Verstellvorrichtung (nicht dargestellt) für die Zuführrohre 56 bzw. 58 weiter verbessert werden. Ferner können Y-Abzweiger sowie Ventileinrichtungen an den Zuführrohren 56 und 58 (nicht dargestellt) zum Einsatz kommen, um die herangeführten Schüttgüter vorteilhaft zu verteilen. Alternativ zu einer hier dargestellten schwenkbaren Anordnung von Zuführrohren 56 bzw. 58 können den Reihen von ersten Pflugscharen 34 und 36 auch jeweils separate, starr am Pflugrahmen 26 angeordnete Zuführrohre (nicht dargestellt) zugeordnet sein.

Das Zuführen der Schüttgüter durch die Zuführschläuche 52 und 54 kann mittels Gebläsen mit an den Mündungen 64 bzw. 66 angeordneten Luftabscheidern aus Vorratsbehältern (nicht dargestellt) erfolgen, die vorteilhaft an der Front und/oder am Heck des Schleppers 14 angeordnet sein können.

### Bezugszeichenliste

- 10: Plug
- 12: Acker
- 14: Schlepper
- 16: linkes Schlepperrad
- 18: rechtes Schlepperrad
- 20: Furche
- 22: ungepflügte Fläche
- 24: gepflügte Fläche
- 26: Pflugrahmen
- 28: Drehvorrichtung
- 30: Stützvorrichtung
- 32: Rad
- 34: Pflugschar
- 36: Pflugschar
- 38: Vorderseite des Pflugschars
- 40: Rückseite des Pflugschars
- 42: frisch gewendete Erde
- 44: Freiraum hinter Pflugschar
- 46: Ausbringeinrichtung
- 48: Ausbringeinrichtungsrahmen
- 50: Schwenkvorrichtung
- 52: erster Zuführschlauch
- 54: zweiter Zuführschlauch
- 56: erstes Zuführrohr
- 58: zweites Zuführrohr
- 60: erstes Ausgaberohr
- 62: zweites Ausgaberohr
- 64: Mündung des ersten Ausgaberohrs
- 66: Mündung des zweiten Ausgaberohrs

## Patentansprüche

1. Pflug (10) mit einem längsgestreckten Pflugrahmen (26), an dem mehrere Pflugschare (34, 36) in Reihe aufeinanderfolgend angeordnet sind, zum Wenden von Erde jeweils einer zugehörigen Scholle auf einem Acker (12) mittels Ziehen des Pfluges (10) in eine Pflügerichtung,
**dadurch gekennzeichnet, dass** eine Ausbringeinrichtung (46) zum Ausbringen eines Schüttgutes an dem Pflug (10) vorgesehen ist, wobei das Ausbringen des Schüttguts pneumatisch erfolgt und die Ausbringeinrichtung (46) je Pflugschar (26) mit einem zugehörigen Ausgaberohr (60) gestaltet ist, dessen Mündung (64) sich in unmittelbarer Nähe des jeweils zugehörigen Pflugschars (34, 36) befindet.

2. Pflug nach Anspruch 1,
**dadurch gekennzeichnet, dass** jedes Pflugschar (34, 36) eine zur Pflügerichtung gewandte Vorderseite (38) und eine davon abgewandte Rückseite (40) aufweist und ein erstes zugehöriges Ausgaberohr (60) mit seiner Mündung (64) an der Vorderseite (38) und/oder ein zweites zugehöriges Ausgaberohr (62) mit seiner Mündung (66) an der Rückseite (40) vorgesehen ist.

3. Pflug nach Anspruch 1 oder 2,
**dadurch gekennzeichnet, dass** die Ausbringeinrichtung (46) mit mindestens einer Prallplatte, einem Schleppschlauch, einem Schleppschuh, einem Luftinjektor oder einer Verteildüse gestaltet ist, zum Verteilen des Schüttguts vor der Mündung (64, 66) des mindestens einen Ausgaberohrs (60, 62).

4. Pflug nach einem der Ansprüche 1 bis 3,
**dadurch gekennzeichnet, dass** die Ausbringeinrichtung (46) mit einer Verstellvorrichtung versehen ist, mittels der die mehreren Ausgaberohre (60, 62) hinsichtlich ihrer Mündungen (64, 66) relativ zum zugehörigen Pflugschar (34, 36) zugleich verstellbar sind.

5. Pflug nach einem der Ansprüche 1 bis 4,
**dadurch gekennzeichnet, dass** die Ausbringeinrichtung (46) mit mehreren Vorratsbehältern für unterschiedliche Schüttgüter versehen ist.

6. Pflug nach Anspruch 5,
**dadurch gekennzeichnet, dass** die Ausbringeinrichtung (46) mindestens einen ersten Vorratsbehälter aufweist, der zum Anbringen an der Front eines Schleppers (14) angepasst ist, und/oder mindestens einen zweiten Vorratsbehälter aufweist, der zum Anbringen am Heck des Schleppers (14) angepasst ist.

7. Pflug nach einem der Ansprüche 1 bis 6,
**dadurch gekennzeichnet, dass** dieser als Volldrehpflug mit mindestens einem ersten Pflugschar (34) und mindestens einem zweiten Pflugschar (36) gestaltet ist, wobei die Pflugschare (34, 36) mittels Drehen des Pfluges (10) abwechselnd in die Erde des zu bearbeitenden Ackers (12) einzusetzen sind.

8. Pflug nach Anspruch 7,
**dadurch gekennzeichnet, dass** die Ausbringeinrichtung (46) mit einer Zuführvorrichtung zum Zuführen des Schüttgutes zu dem mindestens einen Ausgaberohr (60, 62) versehen ist und in der Zuführvorrichtung ein Y-Abzweiger vorgesehen ist, zum abwechselnden Zuführen des Schüttgutes zum mindestens einen ersten Pflugschar (34) und zum mindestens einen zweiten Pflugschar (36).

9. Pflug nach Anspruch 7 oder 8,
**dadurch gekennzeichnet, dass** eine Erkennvorrichtung zum Erkennen der Drehlage des Volldrehpfluges vorgesehen ist, insbesondere in Gestalt eines Rades (32), mittels der an der Zuführvorrichtung einzustellen ist, ob der mindestens eine erste Pflugschar (34) oder der mindestens eine zweite Pflugschar (36) mit Schüttgut zu versorgen ist.

10. Pflug nach einem der Ansprüche 1 bis 9,
**dadurch gekennzeichnet, dass** die Ausbringeinrichtung (46) mit einem Gebläse zum Fördern des Schüttgutes versehen ist und an dem mindestens einen Ausgaberohr (60, 62) ein Luftabscheider zum Abscheiden von Luft aus dem Ausgaberohr (60, 62) vorgesehen ist.

## Claims

1. Plough (10) having an elongate plough frame (26) on which a plurality of ploughshares (34, 36) are arranged in succession in a row, for turning soil of an associated clod in a field (12) by pulling the plough (10) in a ploughing direction, **characterised in that** an application device (46) for applying a bulk material is provided on the plough (10), wherein the application of the bulk material is carried out pneumatically and the application device (46) is configured with an associated application pipe (60) for each ploughshare (26), the mouth (64) of each application pipe being located in the immediate vicinity of the respective associated ploughshare (34, 36).

2. Plough according to claim 1,
**characterised in that** each ploughshare (34, 36) has a front side (38) facing the ploughing direction and a rear side (40) facing away from the ploughing direction, and a first associated application pipe (60) with its mouth (64) on the front side (38) and/or a second associated application pipe (62) with its mouth (66) on the rear side (40) is provided.

3. Plough according to claim 1 or 2,
**characterised in that** the application device (46) is configured with at least a deflector plate, a drag hose, a trailing shoe, an air injector or a distribution nozzle for distributing the bulk material in front of the mouth (64, 66) of the at least one application pipe (60, 62).

4. Plough according to any one of claims 1 to 3,
**characterised in that** the application device (46) is provided with an adjusting device by means of which the plurality of application pipes (60, 62) can simultaneously be adjusted in respect of their mouths (64, 66) relative to the associated ploughshare (34, 36).

5. Plough according to any one of claims 1 to 4,
**characterised in that** the application device (46) is provided with a plurality of storage containers for different bulk materials.

6. Plough according to claim 5,
**characterised in that** the application device (46) has at least a first storage container, which is adapted to be mounted on the front of a tractor (14), and/or at least a second storage container, which is adapted to be mounted on the rear of the tractor (14).

7. Plough according to any one of claims 1 to 6,
**characterised in that** it is in the form of a half-turn plough having at least a first ploughshare (34) and at least a second ploughshare (36), wherein the ploughshares (34, 36) are to be inserted alternately into the soil of the field (12) to be worked by turning the plough (10).

8. Plough according to claim 7,
**characterised in that** the application device (46) is provided with a feed device for feeding the bulk material to the at least one application pipe (60, 62), and there is provided in the feed device a Y-branch for alternately feeding the bulk material to the at least a first ploughshare (34) and to the at least a second ploughshare (36).

9. Plough according to claim 7 or 8,
**characterised in that** there is provided a detection device for detecting the rotational position of the half-turn plough, in particular in the form of a wheel (32) by means of which it is to be set at the feed device whether the at least a first ploughshare (34) or the at least a second ploughshare (36) is to be supplied with bulk material.

10. Plough according to any one of claims 1 to 9,
**characterised in that** the application device (46) is provided with a fan for conveying the bulk material, and an air separator for separating air from the application pipe (60, 62) is provided on the at least one application pipe (60, 62).

## Revendications

1. Charrue (10) avec un châssis de charrue (26) s'étendant dans le sens de la longueur au niveau duquel plusieurs socs de charrue (34, 36) sont disposés en ligne à la suite les uns des autres, pour retourner la terre de respectivement une motte associée dans un champ (12) par traction de la charrue (10) dans une direction de labourage,
**caractérisée en ce qu'**un dispositif d'épandage (46) est prévu pour l'épandage d'un produit en vrac au niveau de la charrue (10), l'épandage du produit en vrac étant réalisé de façon pneumatique et le dispositif d'épandage (46) du soc de charrue (26) respectif étant réalisé avec un tube de distribution (60) associé dont l'embouchure (64) se trouve à proximité immédiate du soc de charrue (34, 36) respectivement associé.

2. Charrue selon la revendication 1, **caractérisée en ce que** chaque soc de charrue (34, 36) comporte un côté avant (38) orienté dans la direction de labourage et un côté arrière (40) s'en écartant et un premier tube de distribution (60) associé est prévu avec son embouchure (64) au niveau du côté avant (38) et/ou un deuxième tube de distribution (62) associé est prévu avec son embouchure (66) au niveau du côté arrière (40).

3. Charrue selon la revendication 1 ou 2, **caractérisée en ce que** le dispositif d'épandage (46) est réalisé avec au moins un déflecteur, un flexible de remorquage, un sabot de remorquage, un injecteur d'air ou une buse d'épandage pour l'épandage du produit en vrac devant l'embouchure (64, 66) de l'au moins un tube de distribution (60, 62).

4. Charrue selon l'une quelconque des revendications 1 à 3, **caractérisée en ce que** le dispositif d'épandage (46) est pourvu d'un dispositif de réglage à l'aide duquel les multiples tubes de distribution (60, 62) peuvent être réglés simultanément par rapport à leurs embouchures (64, 66) par rapport au soc de charrue (34, 36) associé.

5. Charrue selon l'une quelconque des revendications 1 à 4, **caractérisée en ce que** le dispositif d'épandage (46) est pourvu de plusieurs bacs de réserve pour différents produits en vrac.

6. Charrue selon la revendication 5, **caractérisée en ce que** le dispositif d'épandage (46) comporte au moins un premier bac de réserve adapté pour un positionnement à l'avant d'un tracteur (14) et/ou au moins un deuxième bac de réserve adapté pour un positionnement au niveau de l'arrière du tracteur (14).

7. Charrue selon l'une quelconque des revendications 1 à 6, **caractérisée en ce que** celle-ci est réalisée sous la forme d'une charrue entièrement pivotante avec au moins un premier soc de charrue (34) et au moins un deuxième soc de charrue (36), les socs de charrue (34, 36) devant être insérés en alternance dans la terre du champ (12) à traiter par rotation de la charrue (10).

8. Charrue selon la revendication 7, **caractérisée en ce que** le dispositif d'épandage (46) est pourvu d'un dispositif d'alimentation pour amener le produit en vrac à l'au moins un tube de distribution (60, 62) et qu'une bifurcation en Y est prévue dans le dispositif d'alimentation, pour amener en alternance le produit en vrac à au moins un premier soc de charrue (34) et à au moins un deuxième soc de charrue (36).

9. Charrue selon la revendication 7 ou 8, **caractérisée en ce qu'**un dispositif de reconnaissance est prévu pour reconnaître la position de rotation de la charrue entièrement pivotante, notamment sous la forme d'un volant (32) à l'aide duquel le dispositif d'alimentation est réglé, afin de savoir si l'au moins un premier soc de charrue (34) ou l'au moins un deuxième soc de charrue (36) est alimenté en produit en vrac.

10. Charrue selon l'une quelconque des revendications 1 à 9, **caractérisée en ce que** le dispositif d'épandage (46) est pourvu d'une soufflerie pour transporter le produit en vrac et un séparateur d'air est prévu au niveau de l'au moins un tube de distribution (60, 62) pour séparer l'air provenant du tube de distribution (60, 62).
